# EUROPÄISCHE PATENTSCHRIFT

(11) **EP 0 481 385 B1**
(45) Veröffentlichungstag und Bekanntmachung des Hinweises auf die Patenterteilung: **12.01.1994**
(21) Anmeldenummer: 91117445.6
(22) Anmeldetag: 12.10.1991
(51) Int. Cl.: B62D 3/00

(54) **Vorderachslenkung eines Personenkraftwagen**
Front axle steering system of a passenger car
Direction pour les roues avant

(30) Priorität: 18.10.1990 DE 4033065
(43) Veröffentlichungstag der Anmeldung: 22.04.1992
(73) Patentinhaber: Adam Opel Aktiengesellschaft, 65428 Rüsselsheim (DE)
(72) Erfinder: Stein, Günther, W-6090 Rüsselsheim (DE)
(74) Vertreter: Bergerin, Ralf, Dipl.-Ing.

(56) Entgegenhaltungen:
- DE-A- 3 836 944
- DE-B- 2 748 092
- DE-C- 2 648 565

## Beschreibung

Die Erfindung betrifft eine Vorderachslenkung eines Personenkraftwagen (PKW), mit einem Lenkgetriebe, das einen auf einer Lenkgetriebewelle montierten Lenkstockhebel aufweist und mit einem auf einer Fahrzeugseite angeordneten, vorderen Längsträger des Fahrgestells des PKW verbunden ist, sowie einem Lager für einen Lenkzwischenhebel, das mit einem auf der anderen Fahrzeugseite angeordneten Längsträger des Fahrgestells verbunden ist, wobei beide Längsträger einen geschlossenen Querschnitt aufweisen.

Aus der DE 26 48 565 C3 ist eine Lenkgetriebebefestigung an aus dünnwandigen Hohlträgern gebildeten Fahrgestelllenksträgern bekannt, wobei die Lenkungsbefestigung auf dem Längsträger erfolgt. Das Lenkgetriebe ragt damit recht weit in den Motorraum hinein und bestimmt nachteilig die maximale Einbaugröße eines Motors. Aus der Praxis ist es ferner bekannt, das Lenkgetriebe und das Lager für den Lenkzwischenhebel auf den einander zugewandten Seiten der Längsträger seitlich an diesen zu befestigen. Auch hierdurch ergibt sich eine Verringerung des Bauraumes für den Motor.

Es ist Aufgabe der vorliegenden Erfindung, eine Vorderachslenkung eines PKW der genannten Art so weiter zu bilden, daß bei vorgegebenem Abstand der Längsträger des Fahrgestelles eine maximale Einbaubreite für den Motor gewährleistet ist.

Gelöst wird die Aufgabe dadurch, daß ein Teil des Lenkgetriebes und das Lager für den Lenkzwischenhebel derart im zugeordneten Längsträger eingebaut sind, daß die Lenkgetriebewelle und die Achse des Lenkzwischenhebels aus einer unteren Öffnung des jeweiligen Längsträgers hinausragen. Diese Anordnung ermöglicht ein Einfahren breiter Motoren in der Montage, ohne daß der Rahmen verbreitert werden muß, mit allen daraus entstehenden Konsequenzen, sei es insbesondere, daß der Wendekreis sich vergrößert bzw. Spur- und Wagenbreite größer werden oder das Gewicht und damit die Fahrleistung des Fahrzeuges sich ändert. Mit Hilfe der Erfindung wird beispielsweise die Möglichkeit geschaffen, drehmomentstarke, breite V-Motore bei Beibehaltung der Rahmenvorgaben in Mittelklasse-Fahrzeuge einzubauen. Ein weiterer Vorteil der nach außen gerückten Lenkung ist ein größerer Abstand zu den sehr warmen Auspuffleitungen, was spezielle Abschirmbleche zu Lenkgetriebe und Lager des Lenkzwischenhebels erspart. Hinzu kommt, daß die derart eingebaute Lenkung mit ihrer Befestigung und eine gegebenenfalls zusätzliche Innenverstärkung die Längsträger zusätzlich versteift und zwar an einer Stelle, wo erhöhte Biege- und Torsionssteifigkeit gefordert ist. Darüber hinaus resultiert der integrierte Einbau im Vergleich zur seitlichen Montage in einer Reduzierung der Lenkelastizität.

Gemäß einer besonderen Ausführungsform der Erfindung weist der jeweilige Längsträger im wesentlichen einen rechteckigen Querschnitt auf und ist zumindest oben teilweise geöffnet ausgebildet. Das Lenkgetriebe und das Lager für den Lenkzwischenhebel können damit auf einfache Art und Weise in den zugeordneten Längsträger eingesetzt werden, die Fixierung des Lenkgetriebes und des Lagers für den Lenkzwischenhebel erfolgt innerhalb der Ausnehmung des Längsträgers. Vorteilhaft ist der jeweilige Längsträger zusätzlich in vertikaler Flucht mit der oberen Öffnung unten geöffnet ausgebildet. Bei dieser Gestaltung ist der oben über den zugeordneten Längsträger stehende, aus der oberen Öffnung des Längsträgers ragende Bereich des Lenkgehäuses mit der Lenksspindel verbunden, während der die untere Öffnung des Längsträgers durchsetzende Bereich einen Lenksstockhebel aufnimmt. Entsprechend nimmt der andere Längsträger das Lager des Lenkzwischenhebels auf, der im Bereich der unteren Öffnung des zugeordneten Längsträgers einen weiteren Lenksstockhebel trägt.

Zweckmäßig ist die jeweilige Verstärkung im Bereich der Lagerung von Lenkgetriebe bzw. Lager für den Lenkzwischenhebel als mit den inneren Seitenflächen des jeweiligen Längsträgers verbundene Platten ausgebildet. Die Innenverstärkung fixiert das Lenkgetriebe sowie das Lager des Lenkzwischenhebels und sollte mit einer Plustoleranz versehen sein, damit ein Einfahren von oben immer gewährleistet ist. Die Innenverstärkung sollte in beiden Längsträgern gleich ausgebildet sein, so daß der wechselseitige Einbau für Rechts- und Linkslenkung möglich ist.

Gemäß einer weiterhin bevorzugten Ausgestaltung der Erfindung ist vorgesehen, daß das Gehäuse des Lenkgetriebes und das Lager des Lenkzwischenhebels mit speziellen Distanzeinstellschrauben versehen sind. Die Einstellschrauben werden nach dem Einfahren der Komponenten in die Längsträger mit Hilfe eines Innensechskantschlüssels durch seitliche Öffnungen in den Längsträgern bis zum Anschlag an die Innenverstärkung herausgedreht. Damit sind sowohl das Lenkgetriebe als auch das Lager für den Lenkzwischenhebel vor ihrer eigentlichen Befestigung spielfrei gelagert.

In den Figuren ist die erfindungsgemäße Vorderachslenkung eines PKW anhand einer Ausführungsform beispielsweise dargestellt, ohne auf diese Ausführungsform beschränkt zu sein. Es stellt dar:
- Figur 1: den Einbau eines Motors in V-Anordnung und der Vorderachslenkung im Vorderrahmen eines PKW, verdeutlicht in einer stark vereinfachten Ansicht von hinten,
- Figur 2: die Anordnung des das Lenkgetriebe aufweisenden Bereiches der Lenkung in Vorderrahmen, gezeigt in einer stark vereinfachten Seitenansicht,
- Figur 3: eine Ansicht des in Figur 2 gezeigten Bereiches, in Längsrichtung des zugeordneten Längsträgers gesehen,
- Figur 4: die Anordnung des Lagers des Lenkzwischenhebels im anderen Längsträger, gleichfalls in dessen Längsrichtung gesehen,
- Figur 5a: eine Detaildarstellung A gemäß Figur 3, verdeutlicht in einer Position der gezeigten Distanzeinstellschraube beim Einfahren des Lenkgehäuses,
- Figur 5b: eine Darstellung gemäß Figur 5a mit beigedrehter Distanzeinstellschraube nach der Montage und
- Figur 6: eine Aufsicht des Kopfes der Distanzeinstellschraube.

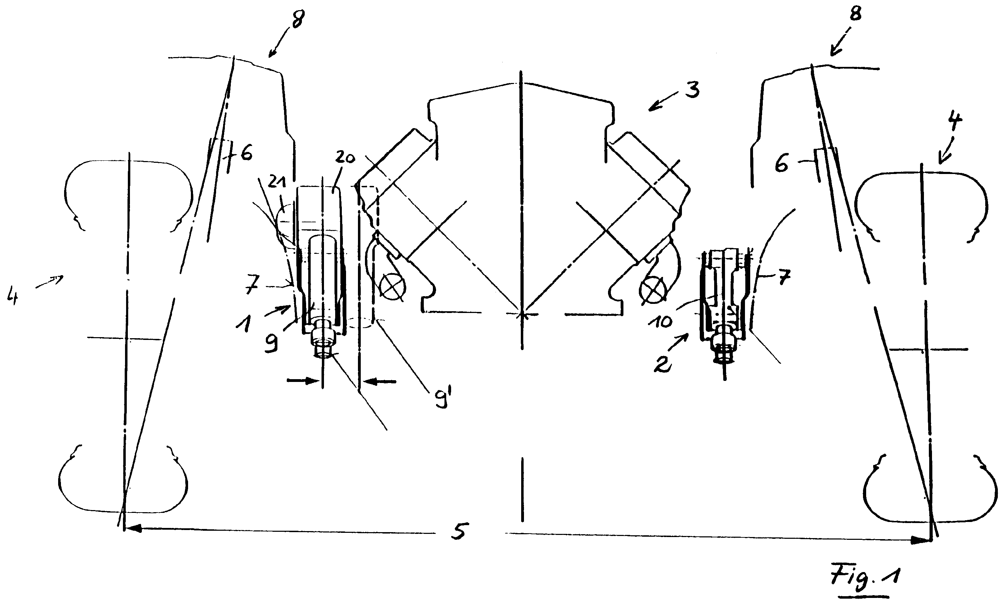

Figur 1 zeigt für den Vorderbau eines PKW die beiden Längsträger 1 und 2 sowie einen Motor 3 in V-Anordnung. Die lichte Breite des V-Motors 3 ist geringfügig kleiner als der Abstand der Längsträger 1 und 2 im Motorbereich, das heißt so bemessen, daß der V-Motor 3 von unten zwischen den Längsträgern 1 und 2 hindurch in die gezeigte Montagestellung eingesetzt werden kann. Mit der Bezugsziffer 4 sind die Vorderräder des Fahrzeuges, mit 5 die Radspur, mit 6 Stoßdämpfer, 7 die Radhüllkurven und 8 die Radhäuser bezeichnet.

Wie dieser Figur zu entnehmen ist, ist in den Längsträger 1 das Lenkgetriebe 9 der Lenkung und in den Längsträger 2 das Lager 10 für den Lenkzwischenhebel der Lenkung eingebaut. Mit strichlierten Linien ist in Figur 1 die zum Stand der Technik beschriebene Anordnung des Lenkgetriebes 9' an der Innenseite des Längsträgers 1 gezeigt. Aus der Darstellung ist erkennbar, daß bei ursprünglicher Anordnung des Lenkgetriebes 9' ein Einführen des V-Motors 3 von unten in den Motorraum nicht möglich ist, zumal auch das Lager 10 des Lenkzwischenhebels erst aufgrund der vorliegenden Erfindung im Längsträger 2 eingebaut ist.

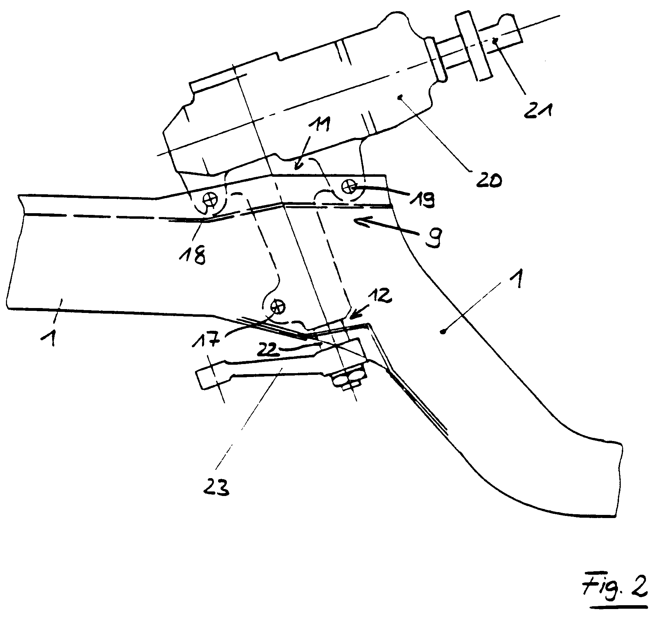

Die Figuren 1 bis 4 verdeutlichen die besondere Gestaltung der Längsträger 1 und 2. Diese sind im Bereich des Lenkgetriebes 9 bzw. des Lagers 10 für den Lenkzwischenhebel nach hinten und unten abgewinkelt ausgebildet und weisen im wesentlichen einen rechteckigen Querschnitt auf. Im Bereich des Lenkgetriebes 9 bzw. des Lagers 10 für den Lenkzwischenhebel ist jeder Längsträger 1 bzw. 2 mit einer oberen Öffnung 11 und einer mit dieser vertikal fluchtenden unteren Öffnung 12 versehen. Durch die jeweilige obere Öffnung 11 ist in den zugeordneten Bereich des Längsträgers 1 bzw. 2 eine auf die Innenkontur des Längsträgers 1 bzw. 2 abgestimmte Innenverstärkung eingesetzt. Jede Innenverstärkung ist im wesentlichen U-förmig ausgebildet, wobei deren beide, beabstandet zueinander angeordnete Seitenwandungen 13a und 13b die Seitenbleche 14a bzw. 14b des Längsträgers 1 bzw. 2 berühren und ein die Seitenwandungen 13a und 13b verbindender Steg 15 am unteren Blech 16 des Längsträgers 1 bzw. 2 anliegt. Entsprechend der unteren Öffnung 12 im Blech 16 ist der Steg 15 mit einer fluchtenden Öffnungen versehen. Benachbart zu Steg 15 und Blech 16 durchsetzen Bohrungen 17 in horizontaler Flucht die Seitenwandungen 13a, 13b und die Seitenbleche 14a, 14b von Längsträger 1 bzw. 2. Im oberen Bereich von Längsträger 1 bzw. 2 durchsetzen Bohrungen 18 und 19, jeweils in horizontaler Flucht, die Seitenwandungen 13a, 13b und Seitenbleche 14a, 14b von Längsträger 1 bzw. 2.

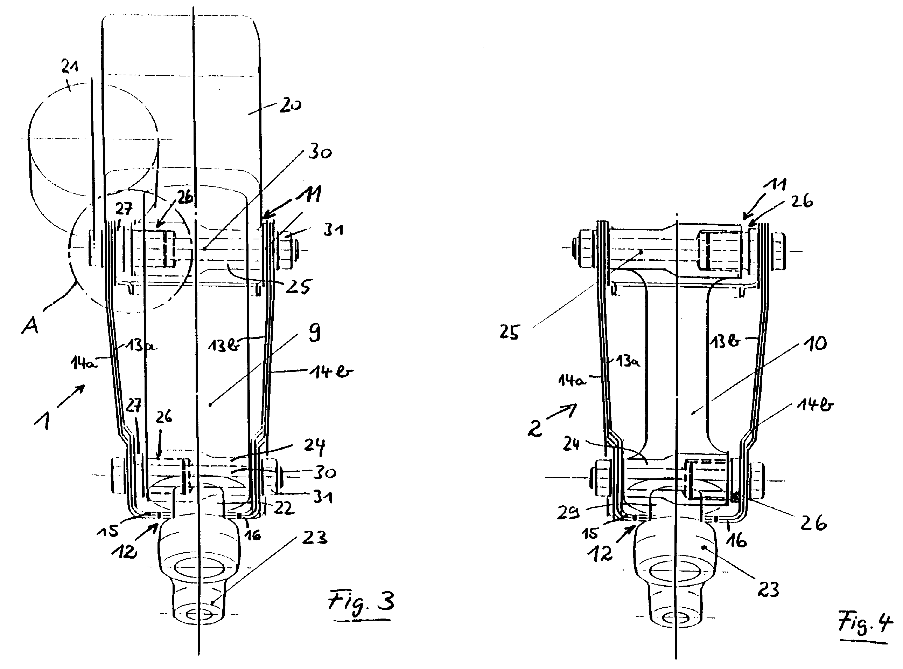

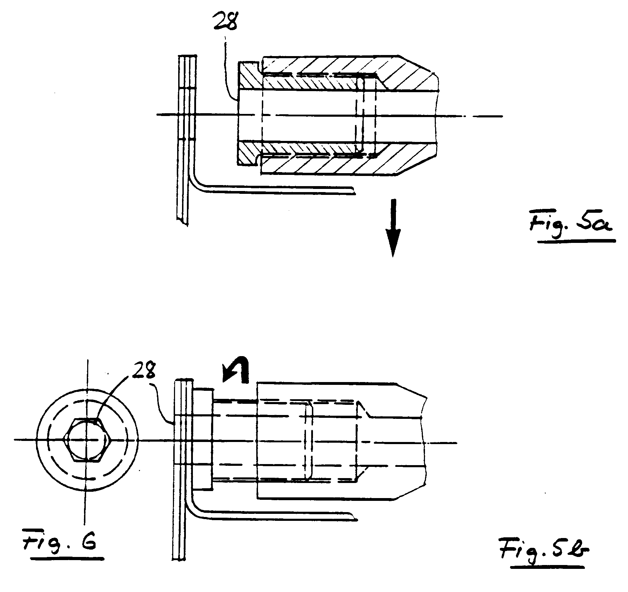

Die Figuren 1 bis 3 zeigen den Einbau des Lenkgetriebes 9 mit Lenkgehäuse 20 im Längsträger 1. In bekannter Art und Weise weist das Lenkgehäuse 20 einen Spindelanschluß 21 für die nicht gezeigte, das Lenkrad aufnehmende Lenksspindel auf, ferner ist mit der Lenkgetriebewelle 22 ein Lenkstockhebel 23 verschraubt. Bezogen auf das montierte Lenkgetriebe 9 weist dieses in der Flucht der Bohrungen 17, 18 und 19 durchgehende Bohrungen auf, von denen in der Darstellung der Figur 3 nur die mit den Bohrungen 17 und 18 im Längsträger 1 zusammenwirkenden Bohrungen 24 und 25 gezeigt sind. Jede der drei Bohrungen im Lenkgetriebe 9 ist im Bereich einer Bohrungsöffnung mit einem Innengewinde zur Aufnahme einer Distanzeinstellschraube 26 versehen, die einen Innensechskantkopf 27 aufweist. Wie der Darstellung der Figuren 5a, 5b und 6 zu entnehmen ist, weist die jeweilige Distanzeinstellschraube 26 eine Durchgangsbohrung 28 auf.

Entsprechend dem zuvor beschriebenen und wie in Figur 4 angedeutet, ist auch das Lager 10 des Lenkzwischenhebels mit drei in Anordnung den Bohrungen im Lenkgetriebe 9 entsprechenden Bohrungen versehen, von denen wiederum nur die Bohrungen 24 und 25 gezeigt sind. Entsprechend der Position des Lenkstockhebels 23 bezüglich des Lenkgetriebes 9 nimmt auch das Lager 10 über eine in diese schwenkbar gelagerte Achse 29 einen Lenksstockhebel 23 auf. Weiterhin ist das Lager 10 des Lenkzwischenhebels entsprechend der Gestaltung des Lenkgetriebes 9 außen mit Gewindebohrungen für die drei Distanzeinstellschrauben 26 versehen.

Bei der Montage der erfindungsgemäßen Vorderachslenkung wird das Lenkgetriebe 9 durch die obere Öffnung 11 in den Längsträger 1 eingesetzt, in der in Figur 3 gezeigten eingesetzten Stellung durchsetzt die Lenkgetriebewelle 22 die untere Öffnung 12 und es befindet sich damit der dieser zugeordnete Lenksstockhebel 23 unterhalb des Längsträgers 1. Beim Montieren des Lenkgetriebes 9 sind die drei Distanzeinstellschrauben 26 vollständig in die Gewindebohrungen eingeschraubt. Nach dem Einfahren des Lenkgetriebes 9 in den Längsträger 1 werden die Distanzeinstellschrauben 26 mittels eines Innensechskantschlüssels bis zum Anschlag an die Seitenwandung 13a herausgedreht, womit das Lenkgetriebe 9 vor seiner eigentlichen Befestigung im Längsträger 1 spielfrei fixiert ist. Die Zugänglichkeit der Innensechskantköpfe 27 ergibt sich dabei durch die Bohrungen 16, 17 und 18 in der Seitenwandung 13a und im Seitenblech 14a. Nach dem spielfreien Fixieren des Lenkgetriebes 9 im Längsträger 1 werden durch die Durchgangsbohrungen 28 in den Distanzeinstellschrauben 26 und die mit diesen fluchtenden Bohrungen 24 und 25 (sowie die nicht gezeigte dritte Bohrung) im Lenkgetriebe 9 Gewindebolzen 30 gesteckt und mit Muttern 31 verschraubt, so daß das Lenkgetriebe 9 im Längsträger 1 verspannt ist.

Entsprechend erfolgt die Montage und Verbindung des Lagers 10 des Lenkzwischenhebels im Längsträger 2. Das Lager 10 wird von oben in den Längsträger 2 eingesetzt, es erfolgt die spielfreie Fixierung des Lagers im Längsträger 2 mittels Herausdrehen der drei Distanzeinstellschrauben 26 und schließlich die endgültige Befestigung über die Gewindebolzen 30 mit den Muttern 31.

Die Verbindung der Lenkstockhebel 23 untereinander und die direkte Anlenkung der Räder 4 erfolgt in bekannter Art und Weise und ist daher nicht näher beschrieben.

### Bezugszeichenliste

- 1: Längsträger
- 2: Längsträger
- 3: V-Motor
- 4: Vorderrad
- 5: Radspur
- 6: Stoßdämpfer
- 7: Radhüllkurve
- 8: Radhaus
- 9: Lenkgetriebe
- 9': Lenkgetriebe
- 10: Lager
- 11: obere Öffnung
- 12: untere Öffnung
- 13a: Seitenwandung
- 13b: Seitenwandung
- 14a: Seitenblech
- 14b: Seitenblech
- 15: Steg
- 16: Blech
- 17: Bohrung
- 18: Bohrung
- 19: Bohrung
- 20: Lenkgehäuse
- 21: Spindelanschluß
- 22: Lenkgetriebewelle
- 23: Lenkstockhebel
- 24: Bohrung
- 25: Bohrung
- 26: Distanzeinstellschraube
- 27: Innensechskantkopf
- 28: Bohrung
- 29: Achse
- 30: Gewindebolzen
- 31: Mutter

## Patentansprüche

1. Vorderachslenkung eines Personenkraftwagen (PKW), mit einem Lenkgetriebe, das einen auf einer Lenkgetriebewelle (22) montierten Lenkstockhebel (23) aufweist und mit einem auf einer Fahrzeugseite angeordneten, vorderen Längsträger des Fahrgestells des PKW verbunden ist, sowie einem Lager für einen Lenkzwischenhebel, das mit einem auf der anderen Fahrzeugseite angeordneten Längsträger des Fahrgestells verbunden ist, wobei beide Längsträger einen geschlossenen Querschnitt aufweisen, **dadurch gekennzeichnet,** daß ein Teil des Lenkgetriebes (9) und das Lager (10) für den Lenkzwischenhebel derart im zugeordneten Längsträger (1, 2) eingebaut sind, daß die Lenkgetriebewelle (22) und die Achse (29) des Lenkzwischenhebels aus einer unteren Öffnung (12) des jeweiligen Längsträgers hinausragen.

2. Vorderachslenkung nach Anspruch 1, **dadurch gekennzeichnet,** daß der jeweilige Längsträger (1, 2) im wesentlichen einen rechteckigen Querschnitt aufweist und zumindest oben teilweise geöffnet (Öffnung 11) ausgebildet ist.

3. Vorderachslenkung nach Anspruch 2, **dadurch gekennzeichnet,** daß der jeweilige Längsträger (1, 2) in vertikaler Flucht mit der oberen Öffnung (11) unten teilweise geöffnet (untere Öffnung 12) ausgebildet ist.

4. Vorderachslenkung nach Anspruch 2 oder 3, **dadurch gekennzeichnet,** daß der jeweilige Längsträger (1, 2) im Bereich der Lagerung von Lenkgetriebe (9) bzw. Lager (10) für den Lenkzwischenhebel mit einer Verstärkung (13a, 13b, 15) versehen ist.

5. Vorderachslenkung nach Anspruch 4, **dadurch gekennzeichnet,** daß die Verstärkung zumindest als mit den inneren Seitenflächen (14a, 14b) des jeweiligen Längsträgers (1, 2) verbundene Platten (13a, 13b) ausgebildet ist.

6. Vorderachslenkung nach Anspruch 5, **dadurch gekennzeichnet,** daß der Abstand der die Innenverstärkung bildenden Platten (13a, 13b) des jeweiligen Längsträgers (1, 2) eine Plustoleranz zur seitlichen Erstreckung von Lenkgetriebe (9) bzw. Lager (10) des Lenkzwischenhebels aufweist.

7. Vorderachslenkung nach Anspruch 6, **dadurch gekennzeichnet,** daß das Gehäuse (20) des Lenkgetriebes (9) und das Lager (10) des Lenkzwischenhebels auf jeweils einer Seite mit mindestens einer Distanzeinstellschraube (26) zur Anlage an einer Platte (13a, 13b) der jeweiligen Innenverstärkung des Längsträgers (1, 2) versehen sind.

8. Vorderachslenkung nach Anspruch 7, **dadurch gekennzeichnet,** daß der jeweilige Längsträger (1, 2) und die diesem zugeordnete Verstärkung (13a, 13b, 15) in der Flucht der Distanzschraube (26) mit einer Seitenöffnung (17, 18, 19) versehen ist, wobei die Distanzeinstellschraube (26) einen Innensechskantkopf (27) aufweist und der Durchmesser des Innensechskantkopfes (27) größer ist als die Weite der Öffnung (17, 18, 19).

9. Vorderachslenkung nach einem der Ansprüche 1 bis 8, **dadurch gekennzeichnet,** daß die Verstärkungen (13a, 13b, 15) der Längsträger (1, 2) identisch ausgebildet sind.

## Claims

1. Front axle steering of an automobile, with a steering drive which has a steering lever (23) fitted to a steering drive shaft (22) and which is connected to a longitudinal front support of the vehicle chassis of the automobile, as well as a bearing for an intermediate steering lever which is connected to a longitudinal support of the vehicle frame arranged on the other side of the vehicle, wherein both longitudinal supports have a closed cross-section, **characterised** in that a part of the steering drive (9) and the bearing (10) for the intermediate steering lever are built into the associated longitudinal support (1, 2) in such a way that the steering drive shaft (22) and the shaft (29) of the intermediate steering lever project from a lower opening (12) of the respective longitudinal support.

2. Front axle steering according to claim 1, **characterised** in that the respective longitudinal support (1, 2) essentially has a rectangular cross-section and is constructed to be partly open at least on top (opening 11).

3. Front axle steering according to claim 2, **characterised** in that the respective longitudinal support (1, 2) in vertical alignment with the top opening (11) is constructed to be partly open at the bottom (lower opening 12).

4. Front axle steering according to claim 2 or 3, **characterised** in that in the region of the bearing of steering drive (9) or bearing (10) for the intermediate steering lever the respective longitudinal support (1, 2) is provided with a reinforcement (13a, 13b, 15).

5. Front axle steering according to claim 4, **characterised** in that the reinforcement is developed at least of the plates (13a, 13b) connected to the inner side walls (14a, 14b) of the respective longitudinal supports (1, 2).

6. Front axle steering according to claim 5, **characterised** in that the distance of the plates (13a, 13b) of the respective longitudinal support (1, 2) forming the inner reinforcement has a positive tolerance with respect to the lateral extension of steering drive (9) or bearing (10) of the intermediate steering lever.

7. Front axle steering according to claim 6, **characterised** in that the housing (20) of the steering drive (9) and the bearing (10) of the intermediate steering lever on each side respectively are provided with at least one distance adjusting screw (26) for contact with a plate (13a, 13b) of the respective inner reinforcement of the longitudinal support (1, 2).

8. Front axle steering according to claim 7, **characterised** in that the respective longitudinal support (1, 2) and its associated reinforcement (13a, 13b, 15) is provided with a side opening (17, 18, 19) in alignment with the distance screw (26), wherein the distance adjusting screw (26) has an internal hexagonal head (27) and the diameter of the internal hexagonal head (27) is greater than the width of the opening (17, 18, 19).

9. Front axle steering according to one of the claims 1 to 8, **characterised** in that the reinforcements (13a, 13b, 15) of the longitudinal supports (1, 2) are constructed identically.

## Revendications

1. Système de direction pour l'essieu avant d'une voiture particulière avec un mécanisme de direction qui présente un levier de direction (23) monté sur un axe (22) de mécanisme de direction et est lié à un longeron avant du châssis du véhicule disposé d'un côté dudit véhicule, ainsi qu'un palier pour un levier intermédiaire de direction qui est lié à un longeron avant du châssis du véhicule disposé de l'autre côté du véhicule, les deux longerons ayant une section fermée, caractérisé par le fait qu'une partie du levier de direction (9) et le palier (10) pour le levier intermédiaire de direction sont montés sur le longeron (1, 2) concerné de manière telle que l'arbre (22) du mécanisme de direction et l'axe (29) du levier intermédiaire de direction sortent par une ouverture (12) inférieure du longeron concerné.

2. Système de direction selon la revendication 1, caractérisé par le fait que le longeron (1, 2) concerné a une section sensiblement rectangulaire et est partiellement ouvert sur le dessus au moins (ouverture 11).

3. Système de direction selon la revendication 2, caractérisé par le fait que le longeron (1, 2) concerné est partiellement ouvert sur le dessous (ouverture inférieure 12) dans l'alignement vertical de l'ouverture supérieure (11).

4. Système de direction selon la revendication 2 ou 3, caractérisé par le fait que le longeron (1, 2) concerné est pourvu d'un renfort (13a, 13b, 15) dans la région du palier du mécanisme de direction (9) ou du palier (10) pour le levier intermédiaire de direction.

5. Système de direction selon la revendication 4, caractérisé par le fait que le renfort est agencé au moins sous forme de plaques (13a, 13b) liées aux faces intérieures (14a, 14b) du longeron (1, 2) concerné.

6. Système de direction selon la revendication 5 caractérisé par le fait que la distance entre les plaques (13a, 13b) qui constituent le renfort intérieur du longeron (1, 2) concerné présente une tolérance positive par rapport à la dimension transversale du mécanisme de direction (9) ou du palier (10) du levier intermédiaire de direction.

7. Système de direction selon la revendication 6, caractérisé par le fait que le boîtier (20) du mécanisme de direction (9) et le palier (10) du levier intermédiaire de direction sont pourvu sur un côté d'au moins une vis de réglage (26) de distance destinée à venir en appui sur une plaque (13a, 13b) du renfort intérieur concerné du longeron (1, 2).

8. Système de direction selon la revendication 7, caractérisé par le fait que le longeron (1, 2) concerné et le renfort (13a, 13b, 15) associé à celui-ci sont pourvus d'une ouverture (17, 18, 19) latérale dans l'alignement de la vis de réglage (26) de distance, la vis de réglage (26) de distance présentant un six pans creux (27) et le diamètre de la tête (27) à six pans creux étant supérieur à celui de l'ouverture (17, 18, 19).

9. Système de direction selon l'une des revendications 1 à 8, caractérisé par le fait que les renforts (13a, 13b, 15) des longerons (1, 2) sont agencés de manière identique.
